# EUROPEAN PATENT APPLICATION

(11) **EP 4 509 288 A1**
(43) Date of publication of application: **19.02.2025**
(21) Application number: 23306388.2
(22) Date of filing: 17.08.2023
(51) Int. Cl.: B29C 45/00, H02G 15/013, H01R 13/53, H01R 13/443, H01R 13/6599

(54) **THERMOPLASTIC INSULATING PLUG AND FABRICATION PROCESS THEREOF**

(71) Applicant: Nexans, 92400 Courbevoie (FR)
(72) Inventor: BRACKENIERS, Christophe, 92400 Courbevoie (FR); CLAUS, Daphne, 92400 Courbevoie (FR); DAELEMAN, Elke, 92400 Courbevoie (FR); VAN DEN BROECK, Stefaan, 92400 Courbevoie (FR); VAN GOETHEM, Franky, 92400 Courbevoie (FR)
(74) Representative: Ipsilon

(57) **Abstract**

An insulating plug is suitable to bolt a connector system comprising a connector, wherein the insulating plug comprises
- an insulation body to seal an insulation bushing of the connector,
- a first semiconductive part provided with a threaded screw base to engage an end of a connecting bolt of the connector, and
- a second semiconductive part opposite to the first semiconductive part, the insulation body comprising a transverse plate between both first and second semiconductive parts, such that both first and second semiconductive parts comprise a base plate and a flange, the transverse plate being adjacent to both base plates,
wherein the insulation body, first semiconductive part and second semiconductive part are all made of thermoplastic materials.

## Description

The present invention relates to a thermoplastic insulating plug.

In screened HV systems of 1000 V and higher, the connection of a cable to any equipment is insulated using three layers: an inner conductive electrode at HV level, an insulating layer and an outer conductive electrode at earth potential. Moreover, for those HV systems of 630 A and higher, the connection of a cable to any equipment via a connector has to be bolted.

In order to fix a bolted connection system made of a 3-layers screened connector, a cable and an equipment, there is a need of an access hole in the connector. This access hole is preferably provided in T-shaped connector.

Cable accessories are widely used along with electrical power cables to assist with, for example, cable connections, cable terminations, splice rejacketing, cable jacket sealing, grounding and cable preparation, and so on. a T-shaped cable connector.

A T-shaped connector comprises a T-shaped main insulation bushing, an inner semiconductive shield layer disposed in the T-shaped main insulation bushing; and an outer semi-conductive shield layer disposed on an outer surface of the T-shaped main insulation bushing. A first end of a horizontal chamber of the T-shaped main insulation bushing is an electrical apparatus connecting chamber for connecting an external electrical apparatus or equipment. Another end of the horizontal chamber, which is opposite to the first end of the T-shaped main insulation bushing is an insulation plug chamber for connecting an insulation plug. A vertical chamber of the T-shaped main insulation bushing comprises a cable connecting chamber, to allow connection between the cable and the equipment.

In US8043102 it is disclosed an insulating plug. It is known in the art insulating plug comprising a first embedded member and a second embedded member provided inside an insulation body. For example, embedded members are brass or aluminum inserts, and the insulation body is epoxy resin molded over both inserts. After fastening a cable lug to an external electrical apparatus by a T-shaped connector assembly comprising a threaded connecting bolt, the insulating plug and the connecting bolt of the T-shaped connector are connected by the first embedded member. The first embedded member has a threaded hole therein to engage the other end of connecting bolt. In this way insulating plug and connecting bolt can be connected together. Second embedded member is used for the operating member when the insulation plug is fitted. That is, the operator screws the second embedded member to fit the insulation plug into the insulation plug chamber of the T-shaped main insulation bushing.

The insulation plug chamber needs to be sealed after bolting the cable to the equipment, but before energizing the system.

A thermoplastic insulating plug according to the invention aims to seal such insulation plug chamber of T-shaped 3-layers screened connectors.

For example, embedded members of prior art insulating plugs are brass or aluminum inserts, and the insulation body is epoxy resin molded over both brass or aluminum inserts. Molding process of those insulating plug is complex and involves thermosetting a 2-components epoxy resin for the insulation body. This type of insulating plug is also difficult to recycle, as brass cannot be recycled in the same process as epoxy resin. And epoxy resin even recyclable cannot be reused in the same way.

Insulating plug shall withstand staying in place for years, even decades.

Alternative material, like EPDM rubbers cannot be used for molding the insulating plug, as as they will not seal perfectly.

Thus, there is a need over prior art solution to provide an insulating plug that would allow to reach at least one of the below goals, these requirements are based in the requirements following CENELEC HD 629.1 :
- to be IP (Ingress Protection) 56,
- to be suitable for medium voltage separable connectors,
- to be electrically stable up to 20.8/36 (42) kV,
- to be able to be connected and disconnected at least 5 times,
- to withstand a temperature range from -40 °C up to 120 °C,
- to have a 40 years service life.

The object of the invention is to provide a thermoplastic insulating plug that overcomes the drawbacks of prior art, and more specifically a cost effective and low carbon footprint insulating plug.

The object of the invention is achieved by means of the patent claims. An insulating plug according to the invention needs 25% less raw materials and energy to make it compared to the existing solution, as part of the raw materials are recycled. An insulating plug according to the invention is also 30% cheaper compared to existing solution, due to shorter molding cycle time, cheaper and lighter raw materials. Carbon footprint is also improved by reduced production scrap waste by using recyclable material. A thermoplastic plug of the invention meets the demand of more sustainable solutions and the use of recyclable material in the cable connector industry.

The object of the invention is to provide an insulating plug suitable to bolt a connector system comprising a connector, where the insulating plug comprises
- an insulation body to seal an insulation bushing of the connector,
- a first semiconductive part provided with a threaded screw base to engage an end of a connecting bolt of the connector, and
- a second semiconductive part opposite to the first semiconductive part, the insulation body comprising a transverse plate between both first and second semiconductive parts, such that both first and second semiconductive parts comprise a base plate and a flange, the transverse plate being adjacent to both base plates,
wherein the insulation body, first semiconductive part and second semiconductive part are all made of thermoplastic materials. The advantage of the solution is to provide a fully thermoplastic insulation body, which is easier to recycle.

The object of the invention is achieved by means of the patent claims.

In one embodiment of the invention, the insulation body, the first semiconductive part and the second semiconductive part are all made of a same thermoplastic material. For example, that thermoplastic material is polyoxymethylene (POM), or also polyamide (PA) or polyphenylene sulfide (PPS). For example, the insulation body is solely comprising that thermoplastic material. Semiconductive parts comprises carbon black particles melted with the thermoplastic particles. Advantageously, the percentage of carbon black particles are the same for the first and second semiconductive parts. This allows to mold respective first and second semiconductive parts with a same material, and ease the molding process, as molding cycle time will be almost the same for both parts.

In some embodiments of the invention, the insulation body comprises annular walls erected in opposite directions from the transverse plate. Annular walls present a circular cross section either internally or externally. Annular walls are not necessarily cylindrical, but preferably frustoconical at least the external shape of the annular walls is with a frustoconical exterior shape. Annular walls are adjacent to one another. The transverse plate fully divides the insulation body in two zones. First semiconductive part is isolated from the second semiconductive part.

Each semiconductive part comprises a base plate and a flange erected from that base plate. The first semiconductive part is placed on one side of the transverse plate, and the second semiconductive part is placed on an opposite side of such transverse part, such that respective flanges of both first and second semiconductive parts erect in opposite directions from their respective base plate. Flanges are not necessarily colinear, nor of the same radial width. Flanges respectively line an interior surface of the annular walls.

In one embodiment, the first semiconductive part is a screw skirted base part comprising the threaded screw base erected from the base plate, the threaded screw base being surrounded by the flange. Preferably the screw base of the screw skirted base part is set back from an opening of the insulating plug. Flange of the first semiconductive component line the annular wall up that opening defined by a front face of the annular wall. The flange thus defines a Faraday cage around the threaded screw base.

In one embodiment, the second semiconductive part comprises a central portion erected from the base plate and surrounded by the flange, the central portion protruding beyond the annular walls. Preferably the central portion has a shape compatible with a hexagon drive extension socket torque wrench and facilitate watertight installation of the insulation plug into a bushing of a connector.

According to one embodiment wherein the annular walls and the transverse plate together define an external frustoconical shape, then first semiconductor part opens at the lowest cross section of this frustoconical shape.

Preferably, the transverse plate is provided with a concave shape to fit the external shape of the base plate of the first conductive part, and a convex shape to fit the external shape of the base plate of the second conductive part.

According to one embodiment of the invention, a width of the transverse plate is wider than lateral width of the annular wall erected from a convex side of the transverse plate. Width management of the insulation body is to avoid any bubbles formed in the material at the time it is molded.

Preferably an exterior surface of the flanges is provided with a set of radial beads annularly positioned around the opening at both end of the respective flanges. Beads increase the surface to cooperate with the insulation body, and increases adhesion of the insulation body to the first and second semiconductive parts.

The aim of the invention is also to add a removable semiconductive shield tail plug removably fitted over the second semiconductive part when the insulation plug bolts a connector system.

The object of the invention is to provide a fabrication process of an insulating plug according to the invention, the insulation plug being suitable to bolt a connector system comprising a connector, where the fabrication process comprises the steps of
- grinding a former insulating plug according to the invention into granulates
- adding a determined amount of carbon black particles to the granulates to prepare a mixture composition
- injection molding both first and second semiconductive parts respectively with the mixture composition,
- overmolding the insulation body over the first and second semiconductive parts with a thermoplastic material.

Preferably, the thermoplastic material for overmolding the insulation body is the same as the one involved into the former insulating plug.

The invention will now be described by means of examples and by reference to the accompanying drawings.
Figure 1 illustrates a T-shaped connector to be bolted at one end by an insulating plug,
Figure 2 illustrates in perspective view one embodiment of an insulating plug according to the invention,
Figure 3 illustrates a side view of the insulating plug of Figure 2,
Figure 4 illustrates a sectional view of the insulating plug of Figure 2,
Figure 5 illustrates a top view of the insulating plug of Figure 2 from the second semiconductive part.

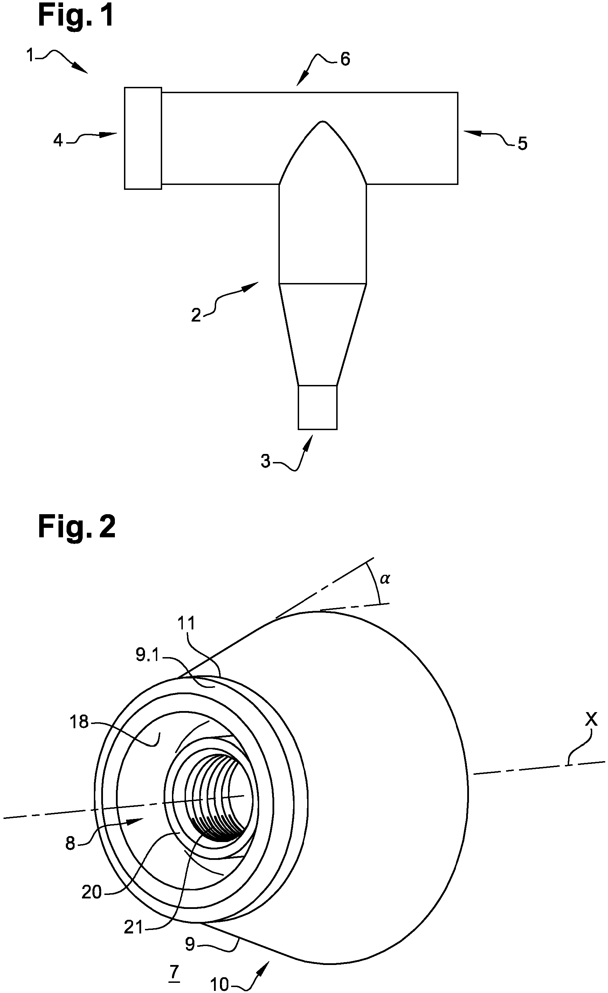

Figure 1 illustrates a T-shaped connector provided with an external body 1 comprising two main extension parts 2 and 6, one being transverse to, and more precisely perpendicular to, the other one. Main extension part 2 is connected at distance of opposite ends of second main extension part 6. A first longitudinal part 2 extends from a first bushing 3 to a location in between opposite bushings 4 and 5 of a second longitudinal part 6, the second longitudinal part 6 being perpendicular to the first longitudinal part 2.

The first bushing is dedicated to receiving a cable end, whereas the second bushing (on the left side of Figure 1) is dedicated to connecting with an equipment. The third bushing (on the right side of Figure 1) is an insulation bushing of the connector.

Connection of the cable with the equipment is obtained thanks to an internal pocket. The internal pocket is provided inside the external body 1. The third bushing 5 is dedicated to receive an insulating plug 7. The insulating plug 7 is inserted into the external body 1 opposite to the equipment. The insulating plug is dedicated to cooperate with the internal socket, the internal socket comprising a threaded connecting bolt.

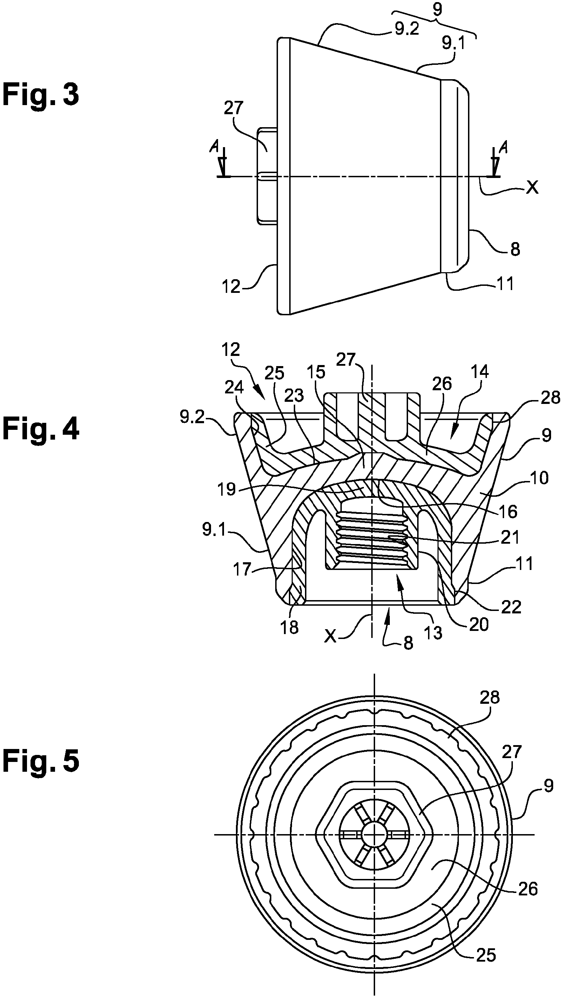

Figures 2 to 5 illustrate one embodiment of an insulating plug 7. The insulating plug 7 presents a first opening 8 with a circular external cross section, and an inner circular cross section. External cross section's diameter is about 30 to 50 mm. The first opening 8 is externally delimited by external walls 9 of an insulation body 10. External walls 9 is globally frustoconical, with an angle *α* between 5° to 45° with a longitudinal axis X of such insulation body 10. The first opening 8 is perpendicular to the longitudinal axis X, which corresponds to a revolution axis of the insulation body 10. External wall 9.1 close to the first opening is provided with an annular groove 11. External wall 9.1 is part of the external walls 9. The annular groove 11 is provided to cooperate with an annular seal joint provided inside the connector 1.

The insulating plug has a length along the X axis of about 50 to 160 mm. Opposite to the first opening 8, the insulating plug 7 is provided with a second opening 12. The second opening 12 presents a circular external cross section, and an inner circular cross section. External cross section's diameter of the second opening 12 is about 55 to 120 mm. The second opening 12 is externally delimited by the external walls 9. The second opening 12 is perpendicular to the longitudinal axis X.

A first semiconductive part 13 is provided inside a first chamber of the insulation body 10, the first chamber opening by way of the first opening 8. A second semiconductive part 14 is provided inside a second chamber of the insulation body 10, the second chamber opening by way of the second opening 12. First and second semiconductive parts 13 and 14 are isolated from one another thanks to a transverse plate 15 of the insulation body. Transverse plate 15 is transverse to the longitudinal axis X.

External walls 9 are erected on both sides of the transverse plate 15. External wall 9.1 extends from the transverse plate 15 in direction of the first opening 8, whereas the external wall 9.2 extends from the transverse plate in direction of the second opening 12. External walls 9.1 and 9.2 form all together a same and continuous outer surface of the external walls 9.

The transverse plate 15 defines a bottom concave surface 16 of the first chamber. The external wall 9.1 defines a cylindrical inner wall 17 of that first chamber. The bottom concave surface 16 is radiused to the cylindrical inner wall 17. According to a variant of the cylindrical shape of the inner wall 17, inner wall 17 may alternatively be slightly frustoconical with a wider inner section at the first opening 8 than at the radiused connection to the bottom concave surface 16.

The first semiconductive part 13 comprises an external surface suited to fit exactly the inner surface of the first chamber. Thus the first semiconductive part 13 comprises an annular flange 18 radiused to an externally concave base plate 19. The annular flange 18 is preferably cylindrical. The first semiconductive part 13 also comprises a screw base 20. The screw base 20 is erected from the base plate 19. The screw base has a cylindrical shape, and an inner thread 21 provided therein. The screw base 20 is set back from the first opening 8. A height of such central portion is lower than a longitudinal length of the annular flange 18.

The annular flange 18 is provided with a set of protruding beads 22 located on an outer surface of that annular flange to enhance overall area provided by the outer flange surface. The beads aim to provide a stronger fit with the inner surface 17 of the external wall 9.1. The beads may be semispherical beads regularly disposed all along the circumferential surface of the annular flange 18.

The transverse plate 15 also defines a bottom convex surface 23 of the second chamber. The external wall 9.2 defines a frustoconical inner wall 24 of that second chamber. The bottom convex surface 23 is radiused to the frustoconical inner wall 24 having a wider inner section at the second opening 12 than at the radiused connection to the bottom convex surface 23.

The second semiconductive part 14 comprises an external surface suited to fit exactly the inner surface of the first chamber. Thus the second semiconductive part 14 comprises an annular flange 25 radiused to an externally convex base plate 26. The annular flange 25 is preferably frustoconical. The second semiconductive part 14 also comprises a central portion 27. The central portion 27 is erected from the convex base plate 26. The central portion has a hexagonal shape. The central portion 27 extends beyond the second opening 12. A height of such central portion emerging from a plane defined by the second opening 12 is about 8 to 20 mm.

The annular flange 25 is provided with a set of radially protruding beads located on an outer surface of that annular flange to enhance overall area provided by the outer flange surface. The beads aim to provide a stronger fit with the inner surface 24 of the external wall 9.2. The beads may be semispherical beads regularly disposed all along the circumferential surface of the annular flange 25.

The insulation body 10 and the first and second semiconductive parts 13 and 14 are a one piece element made of thermoplastic material. In this way, the insulating plug 7 will be easier to manufacture, as all elements are molded or overmolded on an already molded part. This insulating plug will also provide better electrical performances. Moreover the only distinction between material of the insulation body 10 on one end and the semiconductive parts 13 and 14 on the other end, is about conductive particles included in the semiconductive parts. The conductive particles are carbon black particles or any other equivalent.

Also, the insulation plug is reusable, in the sense that at some point, when an insulation plug has to be thrown away, it may be fully grinded and converted into granulates, and then mixed again with additional conductive particles to provide a mixture determined percentage of conductive particles therein, such that when heated that mixture is able to provide material for novel semiconductive parts of another insulating plug to produce.

With the knowledge of the percentage of insulation body material and semiconductive part material, when grinding an insulation plug it is easy to determine quite precisely the percentage of conductive particles therein, and so far to add an amount of those conductive particles in order to provide a material with the same percentage of semiconductive material than in the former semiconductive part of that former insulating plug.

As a precaution step, one may weigh the insulating plug to be grinded and then compare it to a table with insulating plug's regular weight. The quantity of added conductive particles may be determined taking into account losses in the former insulating plug compared to the regular weight's table.

An insulating plug according to the invention may be molded through several steps in mold with drawers.

## Claims

1. An insulating plug suitable to bolt a connector system comprising a connector, where the insulating plug comprises
- an insulation body to seal an insulation bushing of the connector,
- a first semiconductive part provided with a threaded screw base to engage an end of a connecting bolt of the connector, and
- a second semiconductive part opposite to the first semiconductive part, the insulation body comprising a transverse plate between both first and second semiconductive parts, such that both first and second semiconductive parts comprise a base plate and a flange, the transverse plate being adjacent to both base plates,
wherein the insulation body, first semiconductive part and second semiconductive part are all made of thermoplastic materials.

2. An insulating plug according to claim 1, wherein the insulation body is made of a composition consisting of a thermoplastic material, and further wherein the first semiconductive part and the second semiconductive part are made of a composition consisting of that same thermoplastic material and carbon black particles melted therein.

3. An insulating plug according to claim 2, wherein the thermoplastic material is one of polyoxymethylene (POM), polyamide (PA), or polyphenylene sulfide (PPS).

4. An insulating plug according to any one of the preceding claims, wherein the insulation body comprises annular walls erected in opposite directions from the transverse plate, respective flanges being erected in opposite directions from their respective base plate, such that the flanges respectively interiorly line the annular walls.

5. An insulating plug according to any one of the preceding claims, where the first semiconductive part is a screw skirted base part, whereas the second semiconductive part comprises a central portion erected from the base plate and surrounded by a flange, the central portion protruding beyond the annular walls, whereas a screw base of the screw skirted base part is set back from an opening of the insulating plug.

6. An insulating plug according to any one of the preceding claims, where the annular walls and the transverse plate together define an external frustoconical shape, in which the first semiconductor part opens at the lowest section of this frustoconical shape.

7. An insulating plug according to any one of the preceding claims, where the transverse plate is provided with a concave shape to fit the external shape of the base plate of the first conductive part, and a convex shape to fit the external shape of the base plate of the second conductive part.

8. An insulating plug according to any one of the preceding claims, where a width of the transverse plate is wider than lateral width of the annular wall erected from a convex side of the transverse plate.

9. An insulating plug according to any one of the preceding claims, where an exterior surface of the flanges is provided with an annular set of radial beads.

10. An insulating plug according to any one of the preceding claims, where the insulating plug comprises a removable semiconductive shield tail plug removably fitted over the second semiconductive part when the insulation plug bolts a connector system.

11. A fabrication process of an insulating plug according to any one of the preceding claims, the insulation plug being suitable to bolt a connector system comprising a connector, where the fabrication process comprises the steps of
- grinding a former insulating plug into granulates
- adding a determined amount of carbon black particles to the granulates to prepare a mixture composition
- injection molding both first and second semiconductive parts respectively with the mixture composition,
- overmolding the insulation body over the first and second semiconductive parts with a thermoplastic material.
